# EUROPÄISCHE PATENTANMELDUNG

(11) **EP 3 964 353 A1**
(43) Veröffentlichungstag der Anmeldung: **09.03.2022**
(21) Anmeldenummer: 21162294.9
(22) Anmeldetag: 12.03.2021
(51) Int. Cl.: B29D 99/00, B29C 53/04, B29C 53/58, A41D 13/11

(54) **VERFAHREN ZUR HERSTELLUNG VON ATEMSCHUTZMASKEN**

(30) Priorität: 13.03.2020 DE 102020106898
(71) Anmelder: Elastec Suisse AG, 8820 Waedenswil (CH)
(72) Erfinder: Fenske, wilfried, 8820 Wädenswil (CH)
(74) Vertreter: Habermann Intellectual Property Partnerschaft von Patentanwälten mbB

(57) **Zusammenfassung**

Die Erfindung betrifft ein Verfahren zur Herstellung von Atemschutzmasken, wobei ein flächiges Bahnmaterial (1, 15, 18) in einer Längsrichtung (8) des Bahnmaterials (1, 15, 18) fortlaufend transportiert und zu einem geschlossenen Schlauch (4) geformt wird, wobei der geschlossene Schlauch (4) eine erste äußere Schicht (7) bildet und wobei die erste äußere Schicht (7) in Transportrichtung (8) nachfolgend mit elastischen Fäden (9) in Form einer Schlaucharmierung umwickelt wird, sodass die elastischen Fäden (9) gespannt sind, wenn die erste äußere Schicht (7) eine konvexe Form aufweist, wobei auf die elastischen Fäden (9) in Transportrichtung (8) nachfolgend fortlaufend eine zweite äußere Schicht (14) aufgebracht und mit den elastischen Fäden (9) und/oder der ersten äußeren Schicht (7) verbunden wird, wobei die erste äußere Schicht (7), die elastischen Fäden (9) und die zweite äußere Schicht (14) ein elastisches Atemschutzmaskenmaterial (20) bilden, wobei nachfolgend aus dem Atemschutzmaskenmaterial (20) eine Atemschutzmaske längs einer Atemschutzmaskenstanzlinie ausgestanzt oder ausgeschnitten wird, wobei die Atemschutzmaskenstanzlinie eine Atemschutzmaskenkontur sowie zwei in gegenüberliegenden Endbereichen eines durch die Atemschutzmaskenkontur umschlossenen Atemschutzmaskenbereichs angeordnete Ohrkonturen umfasst.

## Beschreibung

Die Erfindung betrifft ein Verfahren zur Herstellung von Atemschutzmasken und eine Atemschutzmaske.

Aus dem Stand der Technik sind unterschiedliche Atemschutzmasken bekannt, die über Mund und Nase getragen werden und dazu dienen, den eigenen Atem beim Ausatmen zurückzuhalten und/oder die angesaugte Luft vor dem Einatmen zu filtern. Die aus dem Stand der Technik bekannten Atemschutzmasken bestehen aus einem Maskenteil, der Mund und Nase bedeckt, sowie einem Halteelement, dass mit dem Maskenteil verbunden ist und an dem Kopf festgelegt wird, um den Maskenteil sicher vor Mund und Nase zu halten. Bei dem Haltelement handelt es sich üblicherweise um ein oder mehrere elastische Bänder, wie zum Beispiel Gummibänder, die um den Kopf oder um die Ohren herum geschlungen werden und mit ihren Endbereichen jeweils in Endbereichen des Maskenteils angeordnet sind.

Als Aufgabe der Erfindung wird es angesehen, Atemschutzmasken einfach und kostengünstig herzustellen.

Diese Aufgabe wird erfindungsgemäß durch ein Verfahren zur Herstellung von Atemschutzmasken gelöst, wobei ein flächiges Bahnmaterial in einer Längsrichtung des Bahnmaterials fortlaufend transportiert und zu einem geschlossenen Schlauch geformt wird, wobei der geschlossene Schlauch eine erste äußere Schicht bildet und wobei die erste äußere Schicht in Transportrichtung nachfolgend mit elastischen Fäden in Form einer Schlaucharmierung umwickelt wird, sodass die elastischen Fäden gespannt sind, wenn die erste äußere Schicht eine konvexe Form aufweist, wobei auf die elastischen Fäden in Transportrichtung nachfolgend fortlaufend eine zweite äußere Schicht aufgebracht und mit den elastischen Fäden und/oder der ersten äußeren Schicht verbunden wird, wobei die erste äußere Schicht, die elastischen Fäden und die zweite äußere Schicht ein elastisches Atemschutzmaskenmaterial bilden, wobei nachfolgend aus dem Atemschutzmaskenmaterial eine Atemschutzmaske längs einer Atemschutzmaskenstanzlinie ausgestanzt und/oder ausgeschnitten wird, wobei die Atemschutzmaskenstanzlinie eine Atemschutzmaskenkontur sowie zwei in gegenüberliegenden Endbereichen eines durch die Atemschutzmaskenkontur umschlossenen Atemschutzmaskenbereichs angeordnete Ohrkonturen umfasst. Auf diese Weise wird eine Atemschutzmaske mit in dem Atemschutzmaskenmaterial integrierten Haltelementen hergestellt, sodass keine zusätzlichen elastischen Bänder erforderlich sind. Die Herstellung des Atemschutzmaskenmaterials sowie das Ausstanzen bzw. Ausschneiden der eigentlichen Atemschutzmaske aus dem Atemschutzmaskenmaterial ist einfach und kostengünstig möglich.

Die Endbereiche des Atemschutzmaskenbereichs bzw. korrespondierende Endbereiche der ausgestanzten oder ausgeschnittenen Atemschutzmaske liegen in quer zu einer Längsrichtung der Atemschutzmaske angeordneten unterschiedlichen Hälften der Atemschutzmaske, sodass beim Tragen der Atemschutzmaske jeweils eine durch die ausgestanzte oder ausgeschnittene Ohrkontur gebildete Ohrausnehmung an jeweils einer Gesichtshälfte an und um das jeweilige Ohr herumgelegt werden kann. Vorteilhafterweise sind die Ohrkonturen kreisförmig oder elliptisch ausgestaltet.

Bei der Herstellung der Atemschutzmasken wird auf ein aus dem Stand der Technik bekanntes Verfahren zur Herstellung eines flächenelastischen textilen Materials zurückgegriffen. Dieses Verfahren wird in der Druckschrift EP 1 753 618 B1 beschrieben. Bei diesem Verfahren wird ein flächiges Bahnmaterial in einer Längsrichtung des Bahnmaterials fortlaufend transportiert und über einen langgestreckten stab- oder rohrartigen Formkern in eine konvexe, schlauchartig geschlossene Form gefaltet. Der auf diese Weise gebildete Schlauch bildet eine erste äußere Schicht auf dessen Außenfläche elastische Fäden in Form einer Schlaucharmierung aufgebracht werden, wobei die elastischen Fäden beim Aufbringen auf die erste äußere Schicht unter einer Vorspannung stehen, sodass die erste äußere Schicht durch in radialer Richtung des Schlauchs von den elastischen Fäden auf den Schlauch wirkende Kräfte verjüngt wird, wenn die erste äußere Schicht bzw. der Schlauch von dem Formkern entfernt wird.

Anschließend wird eine zweite äußere Schicht, ebenfalls aus einem flächigen Bahnmaterial, auf die elastischen Fäden aufgebracht und mit den elastischen Fäden verbunden. Daraufhin wird das auf diese Weise gebildete schlauchförmige Bahnmaterial in Längsrichtung aufgeschnitten, wobei lediglich die elastischen Fäden durchtrennt werden müssen, da die in eine Schlauchform gefaltete erste äußere Schicht und die zweite äußere Schicht so zueinander angeordnet werden, dass das schlauchförmige Bahnmaterial längs einer Linie aufgeschnitten werden kann, in der Endabschnitte der ersten äußeren Schicht sowie der zweiten äußeren Schicht jeweils aneinander anliegen. Auf diese Weise kann das schlauchförmige Bahnmaterial nach Durchtrennen der elastischen Fäden längs dieser Linie zu einem flächenelastischen Bahnmaterial aufgefaltet und anschließend weiterverarbeitet werden.

Im Unterschied zu dem aus dem Stand der Technik bekannten Verfahren ist es bei dem erfindungsgemäßen Verfahren nicht unbedingt erforderlich, den geschlossenen Schlauch vor der Weiterverarbeitung zu den Atemschutzmasken aufzuschneiden. Sofern das erfindungsgemäße Verfahren unter Verwendung des geschlossenen Schlauchs durchgeführt wird, werden beim Ausstanzen oder Ausschneiden längs der Atemschutzmaskenstanzlinie zwei Atemschutzmasken aus den aufeinander liegenden Materiallagen des geschlossenen Schlauchs hergestellt. Es ist aber auch möglich und erfindungsgemäß vorgesehen, dass der geschlossene Schlauch vor dem Ausstanzen oder Ausschneiden zunächst in Längsrichtung aufgetrennt und aufgefaltet wird.

Das Ausschneiden oder Ausstanzen längs der Atemschutzmaskenstanzlinie erfolgt vorteilhafterweise durch einen rotierenden Konturschnitt. Vorteilhafterweise wird dabei die gesamte Atemschutzmaskenstanzlinie in einem Schritt ausgestanzt oder ausgeschnitten.

Bei dem Bahnmaterial handelt es sich vorteilhafterweise um ein Faservliesmaterial, ein Webmaterial, eine Folie oder um ein mehrlagiges Laminat aus diesen oder vergleichbaren Materialien. Die zur Herstellung der Schlaucharmierung verwendeten elastischen Fäden können erfindungsgemäß unter anderem aus Elasthan, Gummi, synthetischem Gummi oder vergleichbaren Materialien hergestellt sein.

Bei der Anordnung der elastischen Fäden an der ersten äußeren Schicht kann auf das aus dem Stand der Technik bekannte Verfahren zurückgegriffen werden, bei dem die erste äußere Schicht in eine konvexe Form gebracht wird und die elastischen Fäden unter Vorspannung auf die erste äußere Schicht aufgebracht werden. Es ist aber auch möglich, die erste äußere Schicht zu verjüngen und die elastischen Fäden auf die verjüngte äußere Schicht unter keiner oder einer geringeren Vorspannung aufzubringen.

Erfindungsgemäß wird die zweite äußere Schicht ebenfalls aus einem flächigen Bahnmaterial hergestellt, wobei vergleichbare Materialien verwendet werden können, die auch zur Herstellung der ersten äußeren Schicht verwendet werden.

Erfindungsgemäß ist vorteilhafterweise vorgesehen, dass die Herstellung der Atemschutzmasken kontinuierlich erfolgt. Durch einen kontinuierlichen Prozess, insbesondere bei Verwendung des noch geschlossenen Schlauchs, können besonders schnell zahlreiche Atemschutzmasken hergestellt werden.

Vorteilhafterweise ist die Atemschutzmaskenstanzlinie bezüglich des Atemschutzmaskenmaterials so ausgerichtet, dass möglichst viele, möglichst lange elastische Fäden durch die ausgestanzte oder ausgeschnittene Atemschutzmaske verlaufen. Um einen möglichst guten Sitz auf Mund und Nase zu ermöglichen, verlaufen vorteilhafterweise möglichst viele elastische Fäden zwischen den durch das Ausschneiden oder Ausstanzen der Ohrkonturen gebildeten Ohrausnehmungen.

Um ein in einer Längsrichtung der Atemschutzmaske, welche parallel zu einer die Ohrausnehmungen verbindenden Achse ausgerichtet ist, möglichst elastische Atemschutzmaske herstellen zu können, ist erfindungsgemäß vorgesehen, dass die elastischen Fäden der Schlaucharmierung so um die erste äußere Schicht gewickelt werden, dass sie einander kreuzen, wobei zwischen den sich kreuzenden Fäden ein spitzer Winkel, vorteilhafterweise ein Winkel kleiner 80° und besonders vorteilhafterweise ein Winkel kleiner 60° ausgebildet wird. Auf diese Weise können möglichst viele, möglichst lange elastische Fäden durch die ausgestanzte oder ausgeschnittene Atemschutzmaske verlaufen.

Erfindungsgemäß ist vorteilhafterweise vorgesehen, dass die elastischen Fäden der Schlaucharmierung so ausgerichtet werden, dass ein Winkel der elastischen Fäden bezüglich einer in der Transportrichtung ausgerichteten Transportachse oder einer rechtwinklig zu der Transportrichtung ausgerichteten Querachse jeweils etwa der Hälfte des zwischen den sich kreuzenden Fäden ausgebildeten Winkels entspricht oder dass der Winkel parallel zueinander ausgerichteter elastischer Fäden bezüglich der Transportachse oder der Querachse jeweils etwa dem zwischen den sich kreuzenden Fäden ausgebildeten Winkel entspricht. Auf diese Weise kann die die Atemschutzmaskenstanzlinie einfach an der Transportachse oder der Querachse ausgerichtet werden, sodass möglichst viele elastische Fäden zwischen den Ohrausnehmungen verlaufen.

Vorteilhafterweise ist zu einer möglichst einfach Ausrichtung der Atemschutzmaskenstanzlinie vorgesehen, dass jeweils eine Längsachse der Atemschutzmasken parallel zu der Transportachse oder der Querachse ausgerichtet ist.

Um die erste äußere Schicht, die elastischen Fäden und die zweite äußere Schicht miteinander zu verbinden, ist erfindungsgemäß vorgesehen, dass auf die elastischen Fäden ein Haftkleber aufgebracht wird. Es ist aber auch möglich und erfindungsgemäß vorgesehen, die zweite äußere Schicht mit der ersten äußeren Schicht beispielsweise durch Schweißen oder dergleichen miteinander zu verbinden, wobei die hierfür verwendeten Verbindungsstellen so ausgestaltet werden, dass die elastische Wirkung der elastischen Fäden nicht beeinträchtigt wird. Erfindungsgemäß können die verschiedenen Verbindungsmöglichkeiten auch kombiniert werden, sodass beispielsweise zusätzlich zu einer klebenden Verbindung eine Schweißverbindung verwendet werden kann.

Vorteilhafterweise ist erfindungsgemäß vorgesehen, dass das Atemschutzmaskenmaterial vor dem Ausstanzen oder Ausschneiden fortlaufend aufgespreizt und in eine flache Form gezogen wird. Auf diese Weise kann das Ausschneiden oder Ausstanzen besonders einfach erfolgen.

Bei einer weiteren vorteilhaften Ausgestaltung des erfindungsgemäßen Verfahrens ist vorteilhafterweise vorgesehen, dass die erste äußere Schicht und die elastischen Fäden vor dem Aufbringen der zweiten äußeren Schicht fortlaufend aufgespreizt und in eine flache Form gezogen werden. Auf diese Weise kann die Anordnung der zweiten äußeren Schicht an den elastischen Fäden erheblich vereinfacht werden.

Um die zweite äußere Schicht einfach an der in die flache Form gezogenen ersten äußeren Schicht anordnen zu können, ist erfindungsgemäß vorgesehen, dass die zweite äußere Schicht aus zwei Teilschichten hergestellt wird, wobei die beiden Teilschichten auf einander gegenüberliegenden Seiten der aufgespreizten ersten äußeren Schicht und der elastischen Fäden aufgebracht werden. Die Teilschichten können aus einem elastischen Bahnmaterial durch auftrennen des elastischen Bahnmaterials oder durch auffalten des elastischen Bahnmaterials längs einer mittig zwischen Längsseiten des elastischen Bahnmaterials verlaufenden Mittelinie hergestellt werden. Es ist aber auch möglich und erfindungsgemäß vorgesehen, dass unterschiedlichen Bahnen eines Bahnmaterials für die Herstellung der Teilschichten verwendet werden können, wobei vorteilhafterweise auch unterschiedliche Bahnmaterialien verwendet werden können, um beispielsweise unterschiedliche Eigenschaften einer Atemschutzmaskenvorderseite und einer Atemschutzmaskenrückseite zu ermöglichen.

Um die Eigenschaften der Atemschutzmasken weiter zu beeinflussen, ist erfindungsgemäß vorgesehen, dass auf die zweite äußere Schicht ebenfalls elastische Fäden in Form einer Schlaucharmierung aufgebracht werden und auf diese elastischen Fäden eine dritte äußere Schicht aufgebracht wird. Die dritte äußere Schicht und die elastischen Fäden können wiederum aus den gleichen Materialien hergestellt sein, wie die erste und zweite äußere Schicht sowie die bereits verwendeten und auf die erste äußere Schicht aufgebrachten elastischen Fäden. Die erste äußere Schicht, die zweite äußere Schicht, die dritte äußere Schicht sowie die zwischen den Schichten angeordneten elastischen Fäden stellen das Atemschutzmaskenmaterial dar. Die dritte äußere Schicht kann erfindungsgemäß auf die gleiche Weise verarbeitet werden, wie die erste und die zweite äußere Schicht.

Vorteilhafterweise ist erfindungsgemäß vorgesehen, dass zwischen der ersten äußeren Schicht und der zweiten äußeren Schicht und/oder zwischen der zweiten äußeren Schicht und der dritten äußeren Schicht eine Funktionseinlage angeordnet wird. Bei der Funktionseinlage kann es sich beispielsweise um ein mit ätherischen Ölen getränktes Kissen handeln, sodass das Tragen der Atemschutzmaske durch den Geruch der ätherischen Öle angenehmer wird.

Um zu vermeiden, dass die Atemschutzmaske durch den eigenen Atem und die darin enthaltene Feuchtigkeit durchnässt, ist erfindungsgemäß vorgesehen, dass die Funktionseinlage aus einem feuchtigkeitsbindenden Material hergestellt ist. Erfindungsgemäß ist vorteilhafterweise vorgesehen, dass die Funktionseinlage superabsorbierende Eigenschaften aufweist.

Da Atemschutzmasken häufig von medizinischem Personal im Umgang mit Patienten oder von Erkrankten eingesetzt werden, ist erfindungsgemäß vorgesehen, dass die Funktionseinlage anti-viral und/oder anti-bakteriell wirkende Substanzen aufweist. Auf diese Weise kann eine Vermehrung von Viren oder Bakterien in oder auf den Atemschutzmasken vermieden werden.

Um die Atemschutzmaske einfach an unterschiedliche Kopfgrößen anpassen zu können bzw. um das Tragen der Atemschutzmaske durch Personen mit verschiedenen Kopfgrößen zu ermöglichen, ist erfindungsgemäß vorgesehen, dass die Atemschutzmaskenstanzlinie mehr als zwei Ohrkonturen aufweist. Durch das Ausschneiden oder Ausstanzen mehrerer Ohrausnehmungen kann der jeweilige Benutzer der Atemschutzmaske die Atemschutzmaske mit verschiedenen Ohrausnehmungen an den Ohren befestigen. Dabei weisen die in quer zur Längsrichtung der Atemschutzmaske einander gegenüberliegenden Abschnitten bzw. in den Endbereichen angeordneten Ohrausnehmungen paarweise unterschiedliche Abstände zueinander auf.

Um den Tragekomfort der Atemschutzmaske zu vergrößern, ist erfindungsgemäß vorgesehen, dass die Ohrkonturen eine Ohrstanzfläche teilweise umschließen, sodass die Ohrstanzfläche mit dem Atemschutzmaskenmaterial nach dem Ausschneiden oder Ausstanzen verbunden ist und zurückgefaltet werden kann. Dabei können die Ohrstanzflächen vorteilhafterweise derart zurückgefaltet werden, dass ein Anlagebereich der Atemschutzmaske an dem Ohr vergrößert wird, wenn die Atemschutzmaske bestimmungsgemäß getragen wird. Durch die Vergrößerung des Anlagebereichs wird die von der Atemschutzmaske auf das Ohr wirkende Kraft auf eine größere Fläche verteilt, sodass der Druck verringert ist.

Der Tragekomfort der Atemschutzmaske kann erfindungsgemäß auch dadurch verbessert werden, dass längs des Umfangs der nach dem Ausschneiden oder Ausstanzen der Ohrkonturen gebildeten Ohrausnehmungen mindestens abschnittsweise eine Verstärkungsschicht ausgebildet wird. Dies kann vorteilhafterweise durch aufbringen einer zusätzlichen Verstärkungslage erreicht werden. Es ist aber auch möglich und erfindungsgemäß vorgesehen, dass das Atemschutzmaskenmaterial im Bereich der Ohrkonturen bzw. der Ohrausnehmungen von einer Außenseite der Atemschutzmaske in Richtung der Ohrausnehmung umgefaltet und beispielsweise durch kleben oder schweißen verheftet wird.

Um eine ausreichende Flächenelastizität der hergestellten Atemschutzmaske zu erreichen, ist erfindungsgemäß vorgesehen, dass eine Länge der elastischen Fäden 120% bis 500% der Länge der elastischen Fäden im ungespannten Zustand entspricht, wenn die erste äußere Schicht eine konvexe Form aufweist. Die konvexe Form im Sinne dieser Erfindung ist dadurch gekennzeichnet, dass die erste äußere Schicht vollständig aufgespreizt ist, sodass sämtliche Verbindungslinien zweier Punkte eines in Querrichtung der ersten äußeren Schicht verlaufenden Umfangs vollständig innerhalb dieses Umfangs verlaufen.

Um die Flächenelastizität der hergestellten Atemschutzmaske bereichsweise beeinflussen zu können, ist erfindungsgemäß vorgesehen, dass mindestens ein elastischer Faden aus einem anderen Material besteht als die übrigen elastischen Fäden. Beispielsweise können Fäden unterschiedlicher Elastizität verwendet werden, wobei einige Fäden zur Verbesserung der Stabilität und Langlebigkeit der hergestellten Atemschutzmaske vorgesehen sein können sowie andere Fäden dazu dienen können, die erforderliche Flächenelastizität bereitzustellen.

Zur Herstellung der schlauchförmigen ersten äußeren Schicht ist erfindungsgemäß vorgesehen, dass das flächige Bahnmaterial in der Längsrichtung des Bahnmaterials fortlaufend über einen länglichen Formkern zu dem Schlauch gefaltet wird, wobei der Formkern so ausgestaltet ist, dass der Schlauch eine konvexe Form aufweist.

Erfindungsgemäß ist vorteilhafterweise vorgesehen, dass eine Form der zweiten äußeren Schicht und/oder der dritten äußeren Schicht an die konvexe Form der ersten äußeren Schicht angepasst ist und so auf die elastischen Fäden aufgebracht wird. Erfindungsgemäß können die zweite äußere Schicht und/oder die dritte äußere Schicht über die über den Formkern gefaltete erste äußere Schicht und die auf der ersten äußeren Schicht angeordneten elastischen Fäden in vergleichbarer Weise in eine Schlauchform gefaltet werden.

Vorteilhafterweise ist erfindungsgemäß vorgesehen, dass die elastischen Fäden unter Vorspannung auf die erste äußere Schicht und/oder die zweite äußere Schicht aufgebracht werden.

Um die elastischen Fäden auf die erste äußere Schicht aufbringen zu können, ist erfindungsgemäß vorgesehen, dass die elastischen Fäden auf Fadenspulen aufgewickelt sind, wobei die Fadenspulen an mindestens einem Planetenrad angeordnet sind, wobei die erste äußere Schicht in der konvexen Form durch das Planetenrad hindurchgeführt wird, wobei das Planetenrad um die erste äußere Schicht herum in eine Rotationsbewegung versetzt wird und wobei die elastischen Fäden fortlaufend von den Fadenspulen abgewickelt werden und auf die erste äußere Schicht aufgebracht werden. Auf analoge Weise können auch elastische Fäden auf die zweite äußere Schicht aufgebracht werden.

Eine Mittelachse des Planetenrads kann erfindungsgemäß axial zu einer in Transportrichtung verlaufenden Mittelachse der schlauchförmig aufgefalteten ersten äußeren Schicht verlaufen. Um den Verlauf bzw. die Ausrichtung der elastischen Fäden an der ersten äußeren Schicht zu beeinflussen, ist es aber auch möglich und erfindungsgemäß vorgesehen, dass die Mittelachse des Planetenrads und die Mittelachse der ersten äußeren Schicht einen Winkel zueinander aufweisen. Auf diese Weise ist es erfindungsgemäß möglich, dass die elastischen Fäden bereichsweise in der Querrichtung auf der ersten äußeren Schicht verlaufen. Auf analoge Weise können auch die zur Anordnung der elastischen Fäden auf der zweiten äußeren Schicht verwendeten Planetenräder ausgerichtet sein.

Zur Beeinflussung der Eigenschaften der Atemschutzmaske und insbesondere zur Beeinflussung der Flächenelastizität der Atemschutzmaske ist erfindungsgemäß vorgesehen, dass sich Abrollgeschwindigkeiten beim Abrollen der elastischen Fäden von unterschiedlichen Fadenspulen voneinander unterscheiden.

Die Eingangs gestellte Aufgabe wird auch durch eine Atemschutzmaske aus einem Atemschutzmaskenmaterial gelöst, wobei das Atemschutzmaskenmaterial eine mit elastischen Fäden in Form einer Schlaucharmierung umwickelte erste äußere Schicht und eine auf die elastischen Fäden aufgebrachte zweite äußere Schicht aufweist, wobei die Atemschutzmaske in Endbereichen der Atemschutzmaske angeordnete Ohrausnehmungen aufweist. Die Atemschutzmaske kann erfindungsgemäß die im Zusammenhang mit dem voranstehend beschriebenen Verfahren definierten gegenständlichen Merkmale unabhängig voneinander aufweisen. Insofern wird auf die voranstehenden Ausführungen verwiesen, die auch für die erfindungsgemäßen Ausgestaltungsformen der Atemschutzmaske gelten.

Bei einer besonders vorteilhaften Ausgestaltung der erfindungsgemäßen Atemschutzmaske ist vorgesehen, dass die Atemschutzmaske nach dem voranstehend beschriebenen Verfahren hergestellt ist.

Weitere vorteilhafte Ausgestaltungen des erfindungsgemäßen Verfahrens werden anhand von in der Zeichnung dargestellten Ausführungsbeispielen näher erläutert. Es zeigt:
Figur 1 eine schematisch dargestellte Ansicht wesentlicher Funktionen und Verfahrensschritte bei der Durchführung des erfindungsgemäßen Verfahrens zur Herstellung von Atemschutzmasken,
Figur 2 eine schematische Darstellung eines alternativ ausgestalteten Verfahrens zur Herstellung von Atemschutzmasken, wobei zwischen die zweite äußere Schicht und die dritte äußere Schicht ein Funktionselement eingebracht wird,
Figuren 3 und 4 schematische Darstellungen unterschiedlicher Ausgestaltungen der mithilfe des erfindungsgemäßen Verfahrens hergestellten Atemschutzmasken,
Figur 5a und 5b schematische Darstellungen der Ausrichtung der elastischen Fäden zueinander und der Atemschutzmaskenstanzlinie zu den elastischen Fäden,
Figur 6 eine schematische Darstellung eines Planetenrads, dessen Mittelachse einen Winkel zur Mittelachse der ersten äußeren Schicht aufweist und
Figur 7 ein schematisch dargestellter Verlauf der mithilfe der in Figur 6 dargestellten Anordnung an der äußeren Schicht aufgebrachten elastischen Fäden.

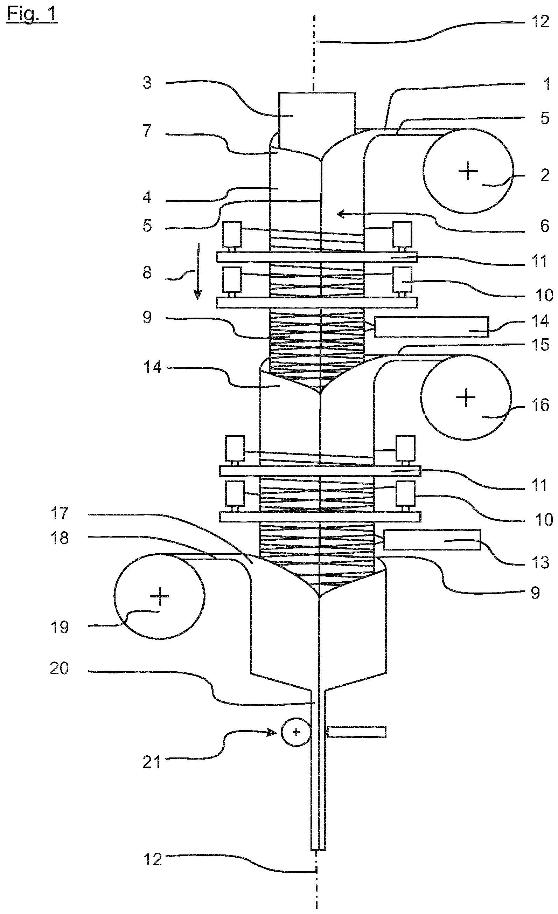

Figur 1 zeigt eine schematische Darstellung des Ablaufs des erfindungsgemäßen Verfahrens. Zunächst wird ein flächiges Bahnmaterial 1 von einer Materialrolle 2 fortlaufend abgerollt und über einen Formkern 3 in eine konvexe Form zu einem Schlauch 4 gefaltet. Dabei wird das Bahnmaterial 1 so gefaltet, dass zu Seitenkanten 5 benachbarte Endabschnitte 6 des Bahnmaterials 1 einander überlappend angeordnet sind. In der Darstellung ist lediglich eine Seitenkante 5 und ein Endabschnitt 6 dargestellt, da sich die zweite Seitenkante und der entsprechende zweite Endabschnitt unterhalb des ersten Endabschnitts 6 befinden und daher nicht sichtbar sind.

Der auf diese Weise gebildete geschlossene Schlauch 4 bildet eine erste äußere Schicht 7. In Längsrichtung bzw. Transportrichtung 8 nachfolgend wird die erste äußere Schicht 7 mit elastischen Fäden 9 in Form einer Schlaucharmierung umwickelt. Die elastischen Fäden 9 werden von Fadenspulen 10 abgewickelt, die an Planetenrädern 11 angeordnet sind. Die Planetenräder 11 werden zu diesem Zweck in eine Rotationsbewegung um die erste äußere Schicht 7 bzw. den Formkern 3 versetzt. Eine Mittelachse bzw. Rotationsachse der Planetenräder entspricht einer Mittelachse 12 der ersten äußeren Schicht 1.

Im Anschluss wird mithilfe einer Haftklebereinrichtung 13 Haftkleber auf die elastischen Fäden 9 aufgebracht. In Transportrichtung 8 nachfolgend wird dann eine zweite äußere Schicht 14 auf die elastischen Fäden 9 aufgebracht, wobei die zweite äußere Schicht 14 ebenfalls aus einem Bahnmaterial 15 besteht, dass von einer Materialrolle 16 abgerollt wird.

In dieser Darstellung wird in Transportrichtung 8 nachfolgend die zweite äußere Schicht 14 erneut mit elastischen Fäden 9 umwickelt, die elastischen Fäden 9 mit Haftkleber besprüht und anschließend eine dritte äußere Schicht 17 auf die elastischen Fäden 10 aufgebracht. Die dritte äußere Schicht 17 wird wiederum aus einem Bahnmaterial 18 hergestellt, das von einer Materialrolle 19 abgerollt wird.

Anschließend wird das auf diese Weise hergestellte Atemschutzmaskenmaterial 20 in eine flache Form gezogen. Aus dem Atemschutzmaskenmaterial 20 werden dann mithilfe einer Schneideinrichtung 21 kontinuierlich Atemschutzmasken durch Ausschneiden längs einer nicht dargestellten Atemschutzmaskenstanzlinie hergestellt.

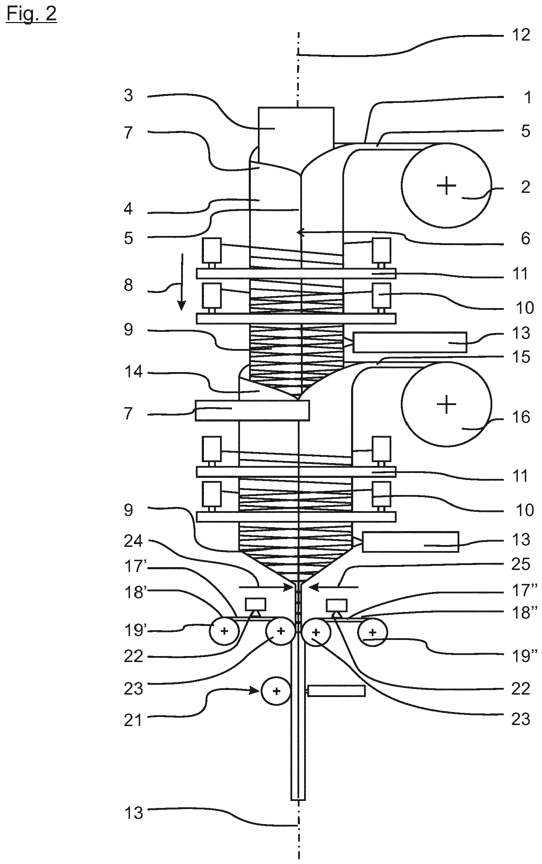

Bei dem in Figur 2 schematisch dargestellten Ablauf des erfindungsgemäßen Verfahrens werden die erste äußere Schicht 7 und die zweite äußere Schicht 14 vor dem Aufbringen der dritten äußeren Schicht 17 in die flache Form gezogen. Bei dem Aufbringen der dritten äußeren Schicht 17, die in diesem Ausführungsbeispiel aus zwei Teilschichten 17' und 17" besteht, die jeweils aus separaten Bahnmaterialien 18' und 18" hergestellt sind und jeweils von Materialrollen 19' und 19" abgerollt werden, wird eine Funktionseinlage 22 auf die Teilschichten 17' und 17" aufgebracht und mithilfe von Vakuumrollen 23 an den Teilschichten 17' und 17" gehalten bis die Teilschichten 17' und 17" auf einander gegenüberliegenden Seiten 24 und 25 des in die flache Form gezogenen Schlauchs 4 aufgebracht werden. Der weitere Ablauf des Herstellungsverfahrens entspricht dem in Figur 1 dargestellten Ablauf.

Bei den in Figur 1 und Figur 2 schematisch dargestellten Verfahrensabläufen kann auch vorgesehen sein, dass lediglich die zweite äußere Schicht 14 aufgebracht wird und auf die dritte äußere Schicht 17 verzichtet wird, wobei in dem in Figur 2 dargestellten Ausführungsbeispiel das Funktionselement 22 auf entsprechende Teilschichten 17' und 17 " der zweiten äußeren Schicht 14 aufgebracht werden könnte.

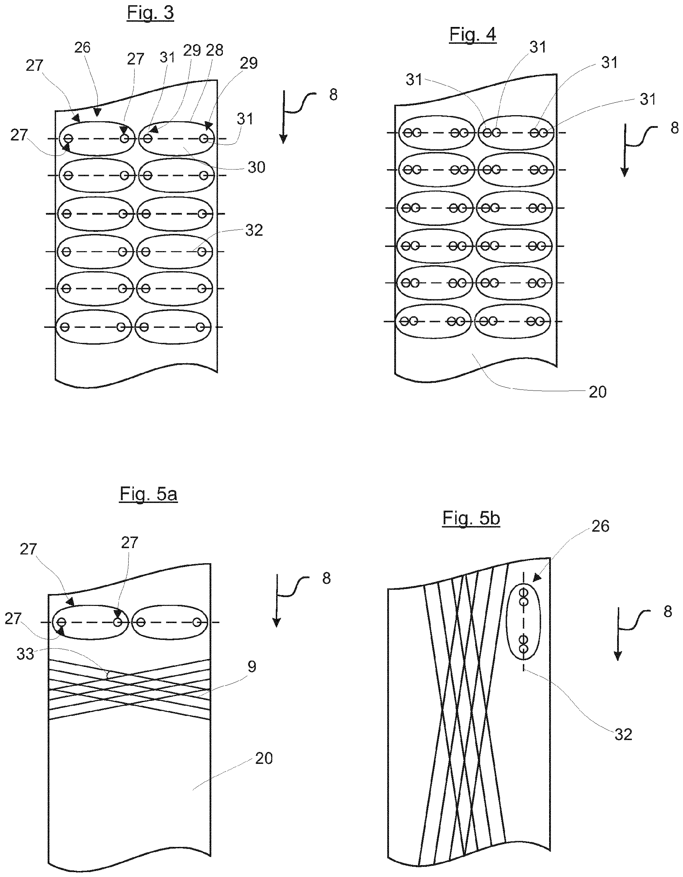

Figuren 3 und 4 zeigen schematische Draufsichten auf mehrere, mithilfe des erfindungsgemäßen Verfahrens hergestellte Atemschutzmasken 26. Die Atemschutzmasken 26 wurden mit Hilfe einer Schneideinrichtung längs einer Atemschutzmaskenstanzlinie 27 ausgeschnitten. Die Atemschutzmaskenstanzlinie 27 weist eine Atemschutzmaskenkontur 28 sowie zwei in gegenüberliegenden Endbereichen 29 eines durch die Atemschutzmaskenkontur 28 umschlossenen Atemschutzmaskenbereichs 30 angeordnete Ohrkonturen 31 auf. Eine Längsachse 32 der Atemschutzmasken 26 ist senkrecht zu der Transportrichtung 8.

Bei dem in Figur 4 dargestellten Ausführungsbeispiel weist die Atemschutzmaskenstanzlinie 27 vier Ohrkonturen 31 auf, sodass die Atemschutzmasken 26 von Personen mit unterschiedlichen Kopfgrößen getragen werden können.

In den Figuren 5a und 5b sind schematisch Ausführungsvarianten der Ausrichtung der elastischen Fäden 9 zueinander und der Atemschutzmaskenstanzlinie 27 zu den elastischen Fäden 9 dargestellt. In den Figuren sind exemplarisch mehrere elastische Fäden 9 auf dem Atemschutzmaskenmaterial 20 sowie die Ausrichtung der Atemschutzmaskenkonkturen 27 in Bezug auf die Ausrichtung der elastischen Fäden 9 dargestellt.

Bei dem in der Figur 5a dargestellten Ausführungsbeispiel sind die elastischen Fäden 9 der Schlaucharmierung so ausgerichtet, dass ein Winkel der elastischen Fäden 9 bezüglich einer in der Transportrichtung 8 ausgerichteten Transportachse jeweils etwa der Hälfte eines zwischen den sich kreuzenden Fäden 9 ausgebildeten Winkels 33 entspricht. Die Längsachsen 32 der Atemschutzmasken 26 sind parallel zu der Transportachse ausgerichtet.

Bei dem in der Figur 5b dargestellten Ausführungsbeispiel sind die elastischen Fäden 9 der Schlaucharmierung so ausgerichtet, dass der Winkel der elastischen Fäden 9 bezüglich einer rechtwinklig zu der Transportrichtung 8 ausgerichteten Querachse jeweils etwa der Hälfte des zwischen den sich kreuzenden Fäden 9 ausgebildeten Winkels 33 entspricht. Die Längsachsen 32 der Atemschutzmasken 26 sind parallel zu der Querachse ausgerichtet.

In den Figuren 3, 4, 5a und 5b sind jeweils exemplarisch einzelne Bestandteile mehrerer gleichartiger mit einem Bezugszeichen gekennzeichnet.

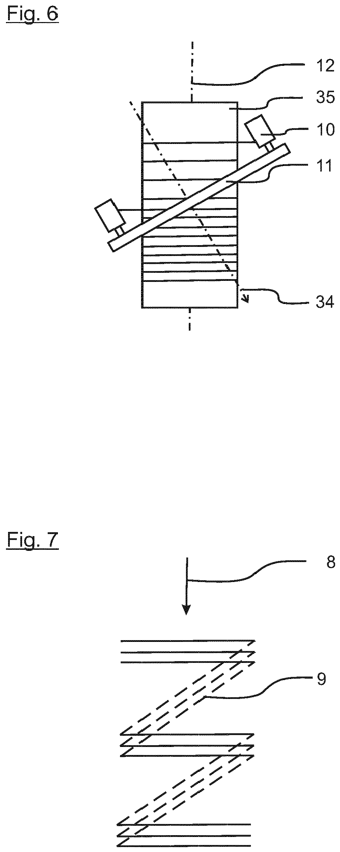

In Figur 6 ist eine alternative Anordnung eines Planetenrads 11 dargestellt, wobei eine Mittelachse 34 des Planetenrads 11 einen Winkel zu einer Mittelachse 12 einer zu umwickelnden und in eine konvexe Form gezogenen äußeren Schicht 35 aufweist. Auf diese Weise kann beispielsweise das in Figur 7 schematisch dargestellte Wickelmuster bzw. der dort dargestellte Verlauf der elastischen Fäden 9 um die äußere Schicht 35 hergestellt werden. Die elastischen Fäden 9 verlaufen in einem durchgezogen dargestellten Abschnitt quer zur Transportrichtung 8 der äußeren Schicht 35 und in einem gestrichelt dargestellten zweiten Abschnitt schräg zu der Transportrichtung 8.

## Patentansprüche

1. Verfahren zur Herstellung von Atemschutzmasken (26), wobei ein flächiges Bahnmaterial (1, 15, 18) in einer Längsrichtung (8) des Bahnmaterials (1, 15, 18) fortlaufend transportiert und zu einem geschlossenen Schlauch (4) geformt wird, wobei der geschlossene Schlauch (4) eine erste äußere Schicht (7) bildet und wobei die erste äußere Schicht (7) in Transportrichtung (8) nachfolgend mit elastischen Fäden (9) in Form einer Schlaucharmierung umwickelt wird, sodass die elastischen Fäden (9) gespannt sind, wenn die erste äußere Schicht (7) eine konvexe Form aufweist, wobei auf die elastischen Fäden (9) in Transportrichtung (8) nachfolgend fortlaufend eine zweite äußere Schicht (14) aufgebracht und mit den elastischen Fäden (9) und/oder der ersten äußeren Schicht (7) verbunden wird, wobei die erste äußere Schicht (7), die elastischen Fäden (9) und die zweite äußere Schicht (14) ein elastisches Atemschutzmaskenmaterial (20) bilden, wobei nachfolgend aus dem Atemschutzmaskenmaterial (20) eine Atemschutzmaske (26) längs einer Atemschutzmaskenstanzlinie (27) ausgestanzt oder ausgeschnitten wird, wobei die Atemschutzmaskenstanzlinie (27) eine Atemschutzmaskenkontur (28) sowie zwei in gegenüberliegenden Endbereichen (29) eines durch die Atemschutzmaskenkontur (28) umschlossenen Atemschutzmaskenbereichs (30) angeordnete Ohrkonturen (31) umfasst.

2. Verfahren gemäß Anspruch 1, **dadurch gekennzeichnet, dass** die Herstellung der Atemschutzmasken (26) kontinuierlich erfolgt.

3. Verfahren gemäß Anspruch 1 oder Anspruch 2, **dadurch gekennzeichnet, dass** die elastischen Fäden (9) einander kreuzend zu der Schlaucharmierung um die erste äußere Schicht (14) gewickelt werden, wobei zwischen den sich kreuzenden Fäden (9) ein spitzer Winkel (33), vorteilhafterweise ein Winkel (33) kleiner 80° und besonders vorteilhafterweise ein Winkel (33) kleiner 60° ausgebildet wird.

4. Verfahren gemäß einem der voranstehenden Ansprüche, **dadurch gekennzeichnet, dass** die elastischen Fäden (9) der Schlaucharmierung so ausgerichtet werden, dass ein Winkel der elastischen Fäden (9) bezüglich einer in der Transportrichtung (8) ausgerichteten Transportachse oder einer rechtwinklig zu der Transportrichtung (8) ausgerichteten Querachse jeweils etwa der Hälfte des zwischen den sich kreuzenden Fäden ausgebildeten Winkels (33) entspricht oder dass der Winkel parallel zueinander ausgerichteter elastischer Fäden bezüglich der Transportachse oder der Querachse jeweils etwa dem zwischen den sich kreuzenden Fäden (9) ausgebildeten Winkel (33) entspricht.

5. Verfahren gemäß einem der voranstehenden Ansprüche, **dadurch gekennzeichnet, dass** jeweils eine Längsachse (32) der Atemschutzmasken (26) parallel zu der Transportachse oder der Querachse ausgerichtet ist.

6. Verfahren gemäß einem der voranstehenden Ansprüche, **dadurch gekennzeichnet, dass** auf die elastischen Fäden (9) ein Haftkleber aufgebracht wird.

7. Verfahren gemäß einem der voranstehenden Ansprüche, **dadurch gekennzeichnet, dass** das Atemschutzmaskenmaterial (20) vor der Herstellung der Atemschutzmaske (26) fortlaufend aufgespreizt und in eine flache Form gezogen wird.

8. Verfahren gemäß einem der Ansprüche 1 bis 6, **dadurch gekennzeichnet, dass** die erste äußere Schicht (7) und die elastischen Fäden (9) vor dem Aufbringen der zweiten äußeren Schicht (14) fortlaufend aufgespreizt und in eine flache Form gezogen werden.

9. Verfahren gemäß Anspruch 8, **dadurch gekennzeichnet, dass** die zweite äußere Schicht (14) aus zwei Teilschichten hergestellt wird, wobei die beiden Teilschichten auf einander gegenüberliegenden Seiten (24, 25) der aufgespreizten ersten äußeren Schicht (7) und der elastischen Fäden (9) aufgebracht werden.

10. Verfahren gemäß einem der voranstehenden Ansprüche, **dadurch gekennzeichnet, dass** auf die zweite äußere Schicht (14) ebenfalls elastische Fäden (9) in Form einer Schlaucharmierung aufgebracht werden und auf diese elastischen Fäden (9) eine dritte äußere Schicht (17) aufgebracht wird.

11. Verfahren gemäß einem der voranstehenden Ansprüche, **dadurch gekennzeichnet, dass** zwischen der ersten äußeren Schicht (7) und der zweiten äußeren Schicht (14) und/oder zwischen der zweiten äußeren Schicht (14) und der dritten äußeren Schicht (17) eine Funktionseinlage (22) angeordnet wird.

12. Verfahren gemäß Anspruch 11, **dadurch gekennzeichnet, dass** die Funktionseinlage (22) aus einem feuchtigkeitsbindenden Material hergestellt ist.

13. Verfahren gemäß Anspruch 11 oder Anspruch 12, **dadurch gekennzeichnet, dass** die Funktionseinlage (22) anti-viral und/oder anti-bakteriell wirkende Substanzen aufweist.

14. Verfahren gemäß einem der voranstehenden Ansprüche, **dadurch gekennzeichnet, dass** die Atemschutzmaskenstanzlinie (27) mehr als zwei Ohrkonturen (31) aufweist.

15. Verfahren gemäß einem der voranstehenden Ansprüche, **dadurch gekennzeichnet, dass** die Ohrkonturen (31) eine Ohrstanzfläche teilweise umschließen, sodass die Ohrstanzfläche mit dem Atemschutzmaskenmaterial (20) nach dem Ausschneiden oder Ausstanzen verbunden ist und zurückgefaltet werden kann.

16. Verfahren gemäß einem der voranstehenden Ansprüche, **dadurch gekennzeichnet, dass** längs des Umfangs der nach dem Ausschneiden oder Ausstanzen der Ohrkonturen (31) gebildeten Ohrausnehmungen mindestens abschnittsweise eine Verstärkungsschicht ausgebildet wird.

17. Verfahren gemäß einem der voranstehenden Ansprüche, **dadurch gekennzeichnet, dass** eine Länge der elastischen Fäden (9) 120% bis 500% der Länge der elastischen Fäden (9) im ungespannten Zustand entspricht, wenn die erste äußere Schicht (7) eine konvexe Form aufweist.

18. Verfahren gemäß einem der voranstehenden Ansprüche, **dadurch gekennzeichnet, dass** mindestens ein elastischer Faden (9) aus einem anderen Material besteht als die übrigen elastischen Fäden (9).

19. Verfahren gemäß einem der voranstehenden Ansprüche, **dadurch gekennzeichnet, dass** das flächige Bahnmaterial (1, 15, 18) in der Längsrichtung (8) des Bahnmaterials (1, 15, 18) fortlaufend über einen länglichen Formkern (3) zu dem geschlossenen Schlauch (4) gefaltet wird, wobei der Formkern (3) so ausgestaltet ist, dass der Schlauch (4) eine konvexe Form aufweist.

20. Verfahren gemäß Anspruch 19, **dadurch gekennzeichnet, dass** eine Form der zweiten äußeren Schicht (14) und/oder der dritten äußeren Schicht (17) an die konvexe Form der ersten äußeren Schicht (7) angepasst ist und so auf die elastischen Fäden (9) aufgebracht wird.

21. Verfahren gemäß Anspruch 19 oder Anspruch 20, **dadurch gekennzeichnet, dass** die elastischen Fäden (9) unter Vorspannung auf die erste äußere Schicht (7) und/oder die zweite äußere Schicht (14) aufgebracht werden.

22. Verfahren gemäß einem der Ansprüche 19 bis 21, **dadurch gekennzeichnet, dass** die elastischen Fäden (9) auf Fadenspulen (10) aufgewickelt sind, wobei die Fadenspulen (10) an mindestens einem Planetenrad (11) angeordnet sind, wobei die erste äußere Schicht (7) in der konvexen Form durch das Planetenrad (11) hindurchgeführt wird, wobei das Planetenrad (11) um die erste äußere Schicht (7) in eine Rotationsbewegung versetzt wird und wobei die elastischen Fäden (9) fortlaufend von den Fadenspulen (10) abgewickelt werden und auf die erste äußere Schicht (7) aufgebracht werden.

23. Verfahren gemäß Anspruch 22, **dadurch gekennzeichnet, dass** das Planetenrad (11) quer zur Längsrichtung (8) der ersten äußeren Schicht (7) ausgerichtet ist.

24. Verfahren gemäß Anspruch 22 oder Anspruch 23, **dadurch gekennzeichnet, dass** sich Abrollgeschwindigkeiten beim Abrollen der elastischen Fäden (9) von unterschiedlichen Fadenspulen (10) voneinander unterscheiden.

25. Atemschutzmaske (26) aus einem Atemschutzmaskenmaterial (20), wobei das Atemschutzmaskenmaterial (20) eine mit elastischen Fäden (9) in Form einer Schlaucharmierung umwickelte erste äußere Schicht (7) und eine auf die elastischen Fäden (9) aufgebrachte zweite äußere Schicht (14) aufweist, wobei die Atemschutzmaske (26) in Endbereichen (29) der Atemschutzmaske (26) angeordnete Ohrausnehmungen aufweist.

26. Atemschutzmaske (26) gemäß Anspruch 25, **dadurch gekennzeichnet, dass** die Atemschutzmaske (26) nach dem Verfahren gemäß einem der Ansprüche 1 bis 24 hergestellt ist.
